# EUROPEAN PATENT SPECIFICATION

(11) **EP 3 062 956 B1**
(45) Date of publication and mention of the grant of the patent: **11.09.2019**
(21) Application number: 14856974.2
(22) Date of filing: 29.10.2014
(51) Int. Cl.: B23K 35/26, B23K 35/02, C22C 13/00, C22C 13/02

(54) **LEAD-FREE, SILVER-FREE SOLDER ALLOYS**
BLEIFREIE, SILBERFREIE LOTLEGIERUNGEN
ALLIAGE DE SOUDURE SANS PLOMB, SANS ARGENT

(30) Priority: 31.10.2013 US 201361898202 P
(43) Date of publication of application: 07.09.2016
(60) Divisional application: 18168385.5
(73) Proprietor: Alpha Assembly Solutions Inc., Somerset, NJ 08873 (US)
(72) Inventor: MURPHY, Michael, Bridgewater, NJ 08807 (US); PANDHER, Ranjit, S., Plainsboro, NJ 08536 (US)
(74) Representative: Boult Wade Tennant LLP
(86) International application number: PCT/US2014/062866
(87) International publication number: WO 2015/066155

(56) References cited:
- EP-A1- 1 273 384
- EP-A1- 2 243 590
- WO-A1-2009/022758
- WO-A2-2007/081775
- CN-A- 1 570 166
- CN-A- 101 214 591
- CN-A- 101 879 667
- CN-A- 102 699 563
- US-A1- 2007 172 381
- US-A1- 2010 059 576

## Description

### BACKGROUND OF THE DISCLOSURE

The present disclosure is directed to methods of joining electrical or mechanical components, and more particularly to methods of attaching electronic components and associated devices onto circuit boards and other electronic substrates.

Electronic assemblers were required to adopt lead-free solder alloys in 2006. One example of an existing lead-free solder alloy can be found in U.S. Patent Application Publication No. 2008/0292492 A1. However, the solder alloy disclosed in this reference contains silver. The most popular lead-free alloys contain up to 4 % by weight silver. The market price of silver has increased steadily in the last several years resulting in substantial increases in solder costs for many electronics assemblers. Many studies have been performed on the acceptability of low silver (less than 1 % by weight) and silver-free alloys for certain types of electronic assemblies. Additionally, many assemblers have successfully been using silver-free alloys for several years thereby gaining acceptance within the industry. As a result of the high cost of silver bearing alloys and the industry's growing experience with using silver-free alloys there is a growing demand for these types of alloys in the market.

WO2007081775 describes lead-free solder compositions for joining electronic devices to printed wiring boards, comprising by weight 0.2 to 0.9 % copper, 0.006 to 0.07 % nickel, 0.03 to 0.08 % bismuth, less than 0.5 % silver, less than 0.010 % phosphorus, and a balance of tin and inevitable impurities. A composition for particular use in automated wave-soldering machines is described, where conventional lead-free solders dissolve excessive copper from printed wiring circuitry and component terminations.

### SUMMARY OF THE DISCLOSURE

In a first aspect the present invention provides a solder alloy as defined in claim 1. In a second aspect the present invention provides a solder joint as defined in claim 12. In a third aspect the present invention a use defined in claim 13. In a fourth aspect the present invention a use defined in claim 14. Further features of the invention are defined in the dependent claims.

One aspect of the present disclosure is directed to a lead-free, silver-free solder alloy comprising 0.001 to 0.800 % by weight copper, 0.080 to 0.120 % by weight bismuth, 0.030 to 0.050 % by weight nickel, 0.008 to 0.012 % by weight phosphorus, and balance tin, together with unavoidable impurities. The solder alloy optionally further comprises one or more of the following: 0.10 % by weight maximum silver; 0.05 % by weight maximum lead; 0.05 % by weight maximum antimony; 0.030 % by weight maximum arsenic; 0.001 % by weight maximum cadmium; 0.001 % maximum zinc; 0.020 % by weight maximum iron; 0.001 % by weight maximum aluminum; 0.050 % by weight maximum indium; 0.050 % by weight maximum gold; 0.10 % by weight maximum chromium; and 0.10 % by weight maximum mercury. In another embodiment, copper is 0.600 to 0.800 % by weight of the solder alloy.

The solder alloy may be in the form of one of a bar, a stick, a solid or flux cored wire, a foil or strip, or a powder or paste, or solder spheres for use in ball grid arrays or chip scale packages, or other pre-formed solder pieces.

The solder alloy may be used to fabricate a solder joint. A method of forming a solder joint is also disclosed.

### DETAILED DESCRIPTION OF THE PREFERRED EMBODIMENTS

There are a number of requirements for a solder alloy to be suitable for use in wave soldering, reflow soldering, hot air levelling processes, ball grid arrays, and other assembly processes. For example, the alloy must exhibit good wetting characteristics in relation to a variety of substrate materials such as copper, nickel, nickel phosphorus ("electroless nickel"). Such substrates may be coated to improve wetting, for example by using tin alloys, gold or organic coatings (OSP). Good wetting also enhances the ability of the molten solder to flow into a capillary gap, and to climb up the walls of a through-plated hole in a printed wiring board, to thereby achieve good through hole filling.

Solder alloys tend to dissolve the substrate and to form an intermetallic compound at the interface with the substrate. For example, tin in the solder alloy may react with the substrate at the interface to form an inter metallic compound layer. If the substrate is copper, then a layer of Cu₆Sn₅ will be formed. Such a layer typically has a thickness of from a fraction of a micron to a few microns. At the interface between this layer and the copper substrate an intermetallic compound of Cu₃Sn may be present. The interface intermetallic layers will tend to grow during aging, particularly where the service is at higher temperatures, and the thicker intermetallic layers, together with any voids that may have developed may further contribute to premature fracture of a stressed joint.

Other factors are: (i) the presence of intermetallics in the alloy itself, which results in improved mechanical properties; (ii) oxidation resistance, which is important in solder spheres where deterioration during storage or during repeated reflows may cause the soldering performance to become less than ideal; (iii) drossing rate; and (iv) alloy stability. These latter considerations may be important for applications where the alloy is held in a tank or bath for long periods of time.

As mentioned above, many lead-free solder alloys include silver, which provides added expense to the solder alloy. The present disclosure aims to address at least some of the problems associated with the prior art and to provide an improved solder alloy that reduces or eliminates silver. Accordingly, the present disclosure provides an alloy suitable for use in a wave solder process, a reflow soldering process, hot air levelling process, a ball grid array or chip scale package, the alloy comprising 0.001 to 0.800 % by weight copper, 0.080 to 0.120 % by weight bismuth, 0.030 to 0.050 % by weight nickel, 0.008 to 0.012 % by weight phosphorus, and balance tin, together with unavoidable impurities. As shown in the table provided for EXAMPLE 1 below, the solder alloy may further include trace amounts of silver (0.10 % by weight maximum), lead (0.05 % by weight maximum), antimony (0.05 % by weight maximum), arsenic (0.030 % by weight maximum), cadmium (0.001 % by weight maximum), zinc (0.001 % maximum), iron (0.020 % by weight maximum), aluminum (0.001 % by weight maximum), indium (0.050 % by weight maximum), gold (0.050 % by weight maximum), chromium (0.10 % by weight maximum), and mercury (0.10 % by weight maximum).

The solder alloy comprises from 0.001 to 0.800 % by weight copper. Copper forms an eutectic with tin, lowering the melting point and increasing the alloy strength. A copper content in the hyper-eutectic range increases the liquidus temperature but further enhances the alloy strength. Copper further lowers the melting point and improves the wetting properties of the solder to copper and other substrates.

The solder alloy comprises 0.080 to 0.120 % by weight bismuth. The presence of bismuth provides strengthening of the alloy via its presence in solid solution at low concentration levels, and as bismuth rich particles or bismuth containing inter-metallics at higher levels. Bismuth reduces the melting point and improves the mechanical properties of the solder alloy for the applications in question, i.e., wave soldering, reflow soldering, hot air levelling, ball grid arrays, and chip scale packages. The bismuth content also contributes to the reduction in the growth rate of copper-tin inter-metallics at the interface which leads to improved mechanical properties of the solder joints made using the alloys. For this reason, the alloy according to the present disclosure comprises from 0.080 to 0.120 % by weight bismuth.

Nickel may act as an inter-metallic compound growth modifier and a grain refiner. For example, while not wishing to be bound by theory, it is believed that nickel forms an inter-metallic with tin and substitutes for the copper to form a CuNiSn inter-metallic. Nickel may also form an inter-metallic with bismuth. The presence of nickel in the alloy has been found to have an advantageous effect in that it reduces the dissolution rate of the thin copper layers on printed circuit boards. In some cases, where there are large areas of bare copper being wetted by the solder, this attribute is helpful to maintain the stability of the solder composition and prevent undue build-up of the copper level. This has particular value in, for example, hot air solder levelling since the potential for problems being caused by the change in the solder bath composition (for example an increase in the copper level) are reduced. For these reasons, the alloy according to the present disclosure comprises from 0.030 to 0.050 % by weight nickel.

Phosphorus may act to reduce the volume of dross formed on the top of an open tank of solder, and is thus a valuable addition in, for example, wave solder baths. The solder alloy includes 0.008 to 0.012 % by weight phosphorus.

The alloy will comprise the balance tin, preferably up to 99% or up to 99.6 % by weight tin, together with unavoidable impurities. Accordingly, the present disclosure further provides an alloy for use in a wave solder process, reflow soldering process, hot air levelling process, a ball grid array or chip scale package. In one embodiment, the solder alloy is particular suited for a wave solder process.

The alloys according to the present disclosure may consist essentially of the recited elements. It will therefore be appreciated that in addition to those elements which are mandatory (i.e., tin, copper, bismuth, nickel, and phosphorus), other non-specified elements may be present in the composition provided that the essential characteristics of the composition are not materially affected by their presence. Accordingly, the present disclosure still further provides an alloy for use in a wave solder process, reflow soldering process, hot air levelling process, a ball grid array, chip scale package or other processes used for electronics assembly.

The present disclosure also provides for the use of the solder alloy composition in a ball grid array or chip scale package.

The present disclosure also provides for a ball grid array joint comprising the above solder alloy composition.

The alloys according to the present disclosure are lead-free or essentially lead-free. The alloys offer environmental advantages over conventional lead-containing solder alloys.

The alloys according to the present disclosure will typically be supplied as a bar, stick or ingot, optionally together with a flux. The alloys may also be provided in the form of a wire, for example a cored wire, which incorporates a flux, a sphere, or other pre-form typically though not necessarily made by cutting or stamping from a strip of solder. These may be alloy only or coated with a suitable flux as required by the soldering process. The alloys may also be supplied as a powder, or as a powder blended with a flux to produce a solder paste.

The alloys according to the present disclosure may be used in molten solder baths as a means to solder together two or more substrates and/or for coating a substrate.

The alloys according to the present disclosure can be used to attach both mechanically and electrically electronic components onto pads of a printed circuit board.

It will be appreciated that the alloys according to the present disclosure may contain unavoidable impurities, although, in total, these are unlikely to exceed 1 % by weight of the composition. Preferably, the alloys contain unavoidable impurities in an amount of not more than 0.5 wt. % by weight of the composition, more preferably not more than 0.3 % by weight of the composition, still more preferably not more than 0.1 % by weight of the composition.

The alloys according to the present disclosure are particularly well suited to applications involving wave soldering, reflow soldering, hot air levelling or ball grid arrays and chip scale packaging. The alloys according to the present disclosure may also find application in non-electronic applications such as, for example, plumbing and automotive radiators.

These solder alloys have been shown to provide acceptable soldering performance and reliability in lab testing and in various field trials. The solder alloy can be sold in a variety of forms including, but not limited to, particles, powder, preforms, paste, solid wire, cored wire, and solid bars, pellets or ingots. The solder alloy can be used in a variety of electronics assembly soldering processes including, but not limited to: reflow, wave soldering, plating, hand soldering, etc.

In one embodiment, the solder alloy has the following alloy properties:

| | |
|---|---|
| liquidus temperature (°C) | 229; |
| solidus temperature (°C) | 227; |
| CTE 30-100 °C (µm/m°C) | 23.8; |
| CTE 100-180 °C (µm/m°C) | 24.3; |
| density (g/cm³) | 7.3; |
| impact energy (Joules) | 51.2; and |
| hardness (HV 0.2) | 9.4. |

In one embodiment, the solder alloy has the following mechanical properties as cast:

| | |
|---|---|
| tensile strength (MPa) | 42.0 |
| yield stress (MPa) | 33.4 |
| elongation (%) | 33.1 |

It should be observed that the lead-free, silver-free solder alloys of embodiments of the present disclosure are suitable for use as a replacement for lead-based solders, tin-silver-copper ("SAC") solder alloys, and other low-silver SAC alloys in wave solder, selective soldering, lead tinning and rework processes. The solder alloys have been designed to minimize copper dissolution as compared to silver-bearing alloys and also to improve total cost of ownership. A variant of the solder alloys may be used as a replenishment alloy in solder baths with elevated copper levels.

The solder alloys may be employed to improve performance characteristics, such as reliability, yield, copper erosion, dross generation, and solder fillet surface. As a result, the solder alloys may achieve performance benefits, such as lowering total cost of ownership due to lower material costs, higher yields, and low dross generation, excellent mechanical reliability, improved solderability due to fast wetting speed, reduced erosion of copper plating during rework which improving assembly reliability, friendlier and less aggressive to solder pot material as compared to silver-bearing alloys, and good performance across different soldering processes. Processes incorporating the solder alloys of the present disclosure improve the removal of oxides from solder, which can reduce defects, such as solder bridging.

In some embodiments, in addition to the applications described herein, the solder alloys may be used in other bonding applications including wire bonding, ribbon bonding, hermetic sealing, lid sealing, metal to metal bonding, metal to glass bonding, general bonding and bonding to various polymeric materials.

In other embodiments, the solder alloys disclosed herein may find applicability in a variety of industries including electronics, consumer electronics, telecommunications, hybrid electric vehicles, wind and solar power generation including photovoltaic cells, transportation, and industrial applications.

The function and advantage of these and other embodiments of the materials and methods disclosed herein will be more fully understood from the examples below. The following examples are intended to illustrate the benefits of the disclosed materials and methods, but do not exemplify the full scope thereof.

### EXAMPLE 1

In one embodiment, a lead-free, silver-free solder alloy includes the following components:

| **Element** | **Specification** |
|---|---|
| Tin (Sn) | balance |
| Copper (Cu) | 0.70 +/- 0.10 % |
| Bismuth (Bi) | 0.10 +/- 0.02 % |
| Nickel (Ni) | 0.04 +/- 0.01 % |
| Phosphorus (P) | 0.008 - 0.012 % |
| Silver (Ag) | 0.10 % maximum |
| Lead (Pb) | 0.05 % maximum |
| Antimony (Sb) | 0.050 % maximum |
| Arsenic (As) | 0.030 % maximum |
| Cadmium (Cd) | 0.001 % maximum |
| Zinc (Zn) | 0.001% maximum |
| Iron (Fe) | 0.020 % maximum |
| Aluminum (Al) | 0.001 % maximum |
| Indium (In) | 0.050 % maximum |
| Gold (Au) | 0.050 % maximum |
| Chromium (Cr) | 0.10 % maximum |
| Mercury (Hg) | 0.10 % maximum |

As shown, the constituent parts of the solder alloy are copper (0.60 to 0.80 % by weight), bismuth (0.08 to 0.12 % by weight), nickel (0.03 to 0.05 % by weight), and balance tin. The solder alloy also includes phosphorus (0.008 to 0.012 % by weight).

### EXAMPLE 2

In another embodiment, a lead-free, silver-free solder alloy was tested to include the following constituent parts:

| **Element** | **Specification** |
|---|---|
| Tin (Sn) | balance |
| Copper (Cu) | 0.743 % |
| Bismuth (Bi) | 0.0881 % |
| Nickel (Ni) | 0.0384 % |
| Phosphorus (P) | 0.0110 % |
| Silver (Ag) | < 0.0001 % |
| Lead (Pb) | 0.0320 % |
| Antimony (Sb) | 0.0110 % |
| Arsenic (As) | 0.0156 % |
| Cadmium (Cd) | 0.0003 % |
| Zinc (Zn) | 0.0010 % |
| Iron (Fe) | 0.0040 % |
| Aluminum (Al) | 0.0006 % |
| Indium (In) | 0.0023 % |
| Gold (Au) | 0.0002 % |

As shown, the constituent parts of the solder alloy are copper (0.743 % by weight), bismuth (0.0881 % by weight), nickel (0.0384 % by weight), and balance tin. The solder alloy also includes phosphorus in an amount of 0.0110 % by weight.

Embodiments of the solder alloy of this example are particularly useful for an initial filling of a solder bath. In this example, the solder alloy includes copper in an amount of 0.743 % by weight.

### EXAMPLE 3

In another embodiment, a lead-free, silver-free solder alloy was tested to include the following constituent parts:

| **Element** | **Specification** |
|---|---|
| Tin (Sn) | balance |
| Copper (Cu) | 0.0267 % |
| Bismuth (Bi) | 0.119 % |
| Nickel (Ni) | 0.0379 % |
| Phosphorus (P) | 0.0092 % |
| Silver (Ag) | 0.00083 % |
| Lead (Pb) | 0.0329 % |
| Antimony (Sb) | 0.0126 % |
| Arsenic (As) | 0.0112 % |
| Cadmium (Cd) | 0.00015 % |
| Zinc (Zn) | 0.00057 % |
| Iron (Fe) | 0.00429 % |
| Aluminum (Al) | < 0.00005 % |
| Indium (In) | 0.0019 % |
| Gold (Au) | 0.00012 % |
| Anti Oxidant | 0.0092% |

As shown, the constituent parts of the solder alloy are copper (0.0267 % by weight), bismuth (0.119 % by weight), nickel (0.0379 % by weight), and balance tin. The solder alloy also includes phosphorus in an amount of 0.0092 % by weight.

Embodiments of the solder alloy of this example are particularly useful for replenishing a solder bath that has been subjected to copper erosion or dissolution. The solder alloy includes copper in an amount of 0.0267 % by weight. With this example, copper is not added to the solder alloy.

It is to be appreciated that embodiments of the compositions and methods discussed herein are not limited in application to the details of construction and the arrangement set forth herein. The compositions and methods are capable of implementation in other embodiments and of being practiced or of being carried out in various ways. Examples of specific implementations are provided herein for illustrative purposes only and are not intended to be limiting. In particular, acts, elements and features discussed in connection with any one or more embodiments are not intended to be excluded from a similar role in any other embodiment.

## Claims

1. A solder alloy comprising:
0.001 to 0.800 % by weight copper;
0.080 to 0.120 % by weight bismuth;
0.030 to 0.050 % by weight nickel;
0.008 to 0.012 % by weight phosphorus; and
balance tin, together with unavoidable impurities,
optionally further comprising one or more of the following:
0.10 % by weight maximum silver;
0.05 % by weight maximum lead;
0.05 % by weight maximum antimony;
0.030 % by weight maximum arsenic;
0.001 % by weight maximum cadmium;
0.001 % maximum zinc;
0.020 % by weight maximum iron;
0.001 % by weight maximum aluminum;
0.050 % by weight maximum indium;
0.050 % by weight maximum gold;
0.10 % by weight maximum chromium; and
0.10 % by weight maximum mercury.

2. The solder alloy of claim 1, containing 0.05 % by weight maximum lead.

3. The solder alloy of claim 1, containing 0.05 % by weight maximum antimony, 0.030 % by weight maximum arsenic, or 0.001 % by weight maximum cadmium.

4. The solder alloy of claim 1, containing 0.001 % maximum zinc.

5. The solder alloy of claim 1, containing 0.020 % by weight maximum iron.

6. The solder alloy of claim 1, containing 0.001 % by weight maximum aluminum.

7. The solder alloy of claim 1, containing 0.050 % by weight maximum indium, 0.050 % by weight maximum gold, or 0.10 % by weight maximum chromium.

8. The solder alloy of claim 1, containing 0.10 % by weight maximum mercury.

9. The solder alloy of claim 1, containing 0.10 % by weight maximum silver.

10. The solder alloy of claim 1, wherein copper is 0.600 to 0.800 % by weight of the solder alloy.

11. The solder alloy of claim 1, wherein the solder alloy is in the form of one of a bar, a stick, a solid or flux cored wire, a foil or strip, or a powder or paste, or solder spheres for use in ball grid arrays or chip scale packages, or other pre-formed solder pieces.

12. A solder joint formed by the solder alloy set forth in claim 1.

13. A use of the solder of claim 1 for forming a solder joint.

14. A use of the solder of claim 1 in a molten solder bath for soldering together two or more substrates or for coating a substrate.

## Patentansprüche

1. Lotlegierung, umfassend:
0,001 bis 0,800 Gew.-% Kupfer;
0,080 bis 0,120 Gew.-% Wismut;
0,030 bis 0,050 Gew.-% Nickel;
0,008 bis 0,012 Gew.-% Phosphor und
Rest Zinn, zusammen mit unvermeidbaren Verunreinigungen,
optional weiterhin eines oder mehrere der folgenden umfassend:
maximal 0,10 Gew.-% Silber;
maximal 0,05 Gew.-% Blei;
maximal 0,05 Gew.-% Antimon;
maximal 0,030 Gew.-% Arsen;
maximal 0,001 Gew.-% Cadmium;
maximal 0,001 % Zink;
maximal 0,020 Gew.-% Eisen;
maximal 0,001 Gew.-% Aluminium;
maximal 0,050 Gew.-% Indium;
maximal 0,050 Gew.-% Gold;
maximal 0,10 Gew.-% Chrom und
maximal 0,10 Gew.-% Quecksilber.

2. Lotlegierung nach Anspruch 1, die maximal 0,05 Gew.-% Blei enthält.

3. Lotlegierung nach Anspruch 1, die maximal 0,05 Gew.-% Antimon, maximal 0,030 Gew.-% Arsen oder maximal 0,001 Gew.-% Cadmium enthält.

4. Lotlegierung nach Anspruch 1, die maximal 0,001 Gew.-% Zink enthält.

5. Lotlegierung nach Anspruch 1, die maximal 0,020 Gew.-% Eisen enthält.

6. Lotlegierung nach Anspruch 1, die maximal 0,001 Gew.-% Aluminium enthält.

7. Lotlegierung nach Anspruch 1, die maximal 0,050 Gew.-% Indium, maximal 0,050 Gew.-% Gold oder maximal 0,10 Gew.-% Chrom enthält.

8. Lotlegierung nach Anspruch 1, die maximal 0,10 Gew.-% Quecksilber enthält.

9. Lotlegierung nach Anspruch 1, die maximal 0,10 Gew.-% Silber enthält.

10. Lotlegierung nach Anspruch 1, wobei Kupfer 0,600 bis 0,800 Gew.-% der Lotlegierung ausmacht.

11. Lotlegierung nach Anspruch 1, wobei die Lotlegierung in der Form von einer bzw. einem von einer Stange, einem Stab, einem festen oder einem Fülldraht, einer Folie oder einem Streifen oder einem Pulver oder einer Paste oder Lotkugeln zur Verwendung in Ball-Grid-Arrays oder Chip-Scale-Packages oder anderen vorgeformten Lotstücken ist.

12. Lötstelle, die durch die in Anspruch 1 dargelegte Lotlegierung gebildet wurde.

13. Verwendung des Lots nach Anspruch 1 zum Bilden einer Lötstelle.

14. Verwendung des Lots nach Anspruch 1 in einem Lotschmelzebad zum Verlöten von zwei oder mehr Substraten oder zum Beschichten eines Substrats.

## Revendications

1. Alliage de brasure comprenant :
de 0,001 à 0,800 % en poids de cuivre ;
de 0,080 à 0,120 % en poids de bismuth ;
de 0,030 à 0,050 % en poids de nickel ;
de 0,008 à 0,012 % en poids de phosphore ; et
de l'étain, ainsi que d'inévitables impuretés, comme complément,
comprenant en outre éventuellement un ou plusieurs des suivants :
0,10 % en poids au maximum d'argent ;
0,05 % en poids au maximum de plomb ;
0,05 % en poids au maximum d'antimoine ;
0,030 % en poids au maximum d'arsenic ;
0,001 % en poids au maximum de cadmium ;
0,001 % au maximum de zinc ;
0,020 % en poids au maximum de fer ;
0,001 % en poids au maximum d'aluminium ;
0,050 % en poids au maximum d'indium ;
0,050 % en poids au maximum d'or ;
0,10 % en poids au maximum de chrome ; et
0,10 % en poids au maximum de mercure.

2. Alliage de brasure de la revendication 1 contenant 0,05 % en poids au maximum de plomb.

3. Alliage de brasure de la revendication 1 contenant 0,05 % en poids au maximum d'antimoine, 0,030 % en poids au maximum d'arsenic ou 0,001 % en poids au maximum de cadmium.

4. Alliage de brasure de la revendication 1 contenant 0,001 % en poids au maximum de zinc.

5. Alliage de brasure de la revendication 1 contenant 0,020 % en poids au maximum de fer.

6. Alliage de brasure de la revendication 1 contenant 0,001 % en poids au maximum d'aluminium.

7. Alliage de brasure de la revendication 1 contenant 0,050 % en poids au maximum d'indium, 0,050 % en poids au maximum d'or ou 0,10 % en poids au maximum de chrome.

8. Alliage de brasure de la revendication 1 contenant 0,10 % en poids au maximum de mercure.

9. Alliage de brasure de la revendication 1 contenant 0,10 % en poids au maximum d'argent.

10. Alliage de brasure de la revendication 1, où le cuivre représente de 0,600 à 0,800 % en poids de l'alliage de brasure.

11. Alliage de brasure de la revendication 1, où l'alliage de brasure est sous la forme de un parmi une barre, un manche, un fil métallique plein ou à flux incorporé, une feuille ou une bande métallique ou une poudre ou une pâte, ou des sphères de brasure destinées à être utilisées dans des matrices à billes ou dans des boîtiers-puces, ou d'autres pièces de brasure préformées.

12. Joint de brasure constitué de l'alliage de brasure selon la revendication 1.

13. Utilisation de la brasure de la revendication 1 pour former un joint de brasure.

14. Utilisation de la brasure de la revendication 1 dans un bain de brasure en fusion pour souder ensemble deux ou plusieurs substrats ou pour enduire un substrat.
